# FASCICULE DE BREVET EUROPEEN

(11) **EP 0 604 283 B1**
(45) Date de publication et mention de la délivrance du brevet: **27.05.1998**
(21) Numéro de dépôt: 93403074.3
(22) Date de dépôt: 17.12.1993
(51) Int. Cl.: G02B 27/00

(54) **Dispositif de maintien et de guidage pour collimateur**
Vorrichtung zur Halterung und Führung eines Kollimators
Mounting and guiding device for collimator

(30) Priorité: 24.12.1992 FR 9215708
(43) Date de publication de la demande: 29.06.1994
(73) Titulaire: SEXTANT AVIONIQUE, 92360 Meudon-la-Forêt (FR)
(72) Inventeur: Darrieux, Jean-Marc, F-92402 Courbevoie Cédex (FR); Nicolo, Patrick, F-92402 Courbevoie Cédex (FR)
(74) Mandataire: Benoit, Monique

(56) Documents cités:
- EP-A- 0 279 532
- US-A- 4 188 090

## Description

La présente invention concerne un dispositif de maintien et de guidage d'un collimateur, notamment pour un collimateur destiné à être monté au plafond d'un aéronef, et susceptible d'être déplacé selon une trajectoire complexe entre une position opérationnelle et une position rangée.

Le collimateur est un équipement optoélectronique qui, placé devant les yeux du pilote, permet de superposer au paysage extérieur, des images synthétiques collimatées à l'infini. Ces images doivent être positionnées avec précision par rapport aux références de l'aéronef.

A l'heure actuelle, certains collimateurs sont fixés au plafond de l'aéronef, au-dessus de la tête du pilote. Lorsque ce dernier veut l'utiliser, il lui suffit d'abaisser devant ses yeux une glace semi-réfléchissante faisant partie du collimateur, laquelle glace a justement pour rôle de superposer les images au paysage.

L'inconvénient de ce type de collimateurs est qu'ils restent proches de la tête du pilote, même en position non-opérationnelle.

Pour remédier à ce problème de proximité, certains collimateurs, mobiles en translation sur un support fixé au plafond de l'aéronef, ont été proposés. Dans ce type de collimateurs, le pilote peut manoeuvrer, manuellement ou par une motorisation, le collimateur en le translatant sur son support, soit vers sa position opérationnelle, soit vers sa position de rangement.

L'inconvénient de ces collimateurs réside dans le fait qu'ils ne peuvent s'adapter qu'à un style d'environnement.

Or, d'un avion à un autre, certaines contraintes d'encombrement peuvent empêcher la mise en place d'un collimateur mobile entre deux points donnés par une simple translation.

Un premier objectif de l'invention est de proposer un dispositif assurant le maintien et le guidage du collimateur selon une trajectoire complexe, typiquement à six degrés de liberté, entre sa position opérationnelle et sa position de rangement, cette trajectoire étant prédéterminée en fonction de l'espace disponible dans l'aéronef.

Un second objectif de l'invention est de proposer un tel dispositif de maintien et de guidage dont la fabrication soit aisément adaptable en fonction de la trajectoire prédéterminée que l'on impose, laquelle trajectoire peut varier d'un aéronef à l'autre.

Plus précisément, la présente invention concerne un dispositif de maintien et de guidage d'un collimateur dans un aéronef selon une trajectoire prédéterminée permettant au collimateur d'être déplacé par l'action de moyens de commande, entre une position opérationnelle et une position rangée, le dispositif étant caractérisé en ce que, la trajectoire étant prédéterminée dans un espace à trois dimensions (X, Y, Z), il comporte :
- Une première structure fixée à l'aéronef par des premiers moyens de fixation, et comportant une rainure de guidage centrale comprenant deux parois internes parallèles à une première trajectoire plane, ainsi que deux rainures de guidage latérales de part et d'autre de la rainure centrale, comprenant chacune deux parois internes parallèles respectivement à une seconde et une troisième trajectoires, la seconde et la troisième trajectoires étant situées dans deux plans sensiblement parallèles entre eux, et perpendiculaires à la première trajectoire ;
- Une seconde structure solidaire du collimateur par des seconds moyens de fixation, et mobile par rapport à la première structure par l'intermédiaire d'un dispositif de guidage central et d'un premier et second dispositifs de guidage latéraux, situés sur cette seconde structure et coopérant respectivement avec la rainure centrale et les rainures latérales de la première structure pour assurer le maintien et le guidage de la seconde structure et du collimateur sur chaque rainure, les trajectoires relatives à chaque rainure étant telles que leur combinaison assure un mouvement de la seconde structure selon la trajectoire prédéterminée.

Le dispositif de maintien et de guidage selon l'invention tel qu'il va être décrit, permet également, de façon avantageuse, un démontage aisé du collimateur en cas de panne, et peut comporter des moyens qui assurent une bonne répétitivité de positionnement du collimateur en position opérationnelle.

L'invention, ainsi que ses avantages, sera mieux comprise au vu de la description suivante, faite en référence aux figures annexées :
- La figure 1 montre un exemple de trajectoire complexe que doit suivre le collimateur par l'intermédiaire du dispositif de maintien et de guidage selon l'invention ;
- La figure 2 est une vue éclatée d'un exemple de réalisation d'un dispositif de maintien et de guidage d'un collimateur selon l'invention ;
- Les figures 3A et 3B sont des vues en perspective, respectivement de dessus et de dessous, de la première structure fixe faisant partie du dispositif de guidage et de maintien de la figure 2 ;
- La figure 4 est une vue de dessus en perspective de la seconde structure mobile faisant partie du dispositif de guidage et de maintien de la figure 2 ;
- La figure 5 est une vue dans le plan ZY illustrant un exemple de réalisation des moyens de fixation du collimateur à la structure mobile du dispositif selon l'invention.

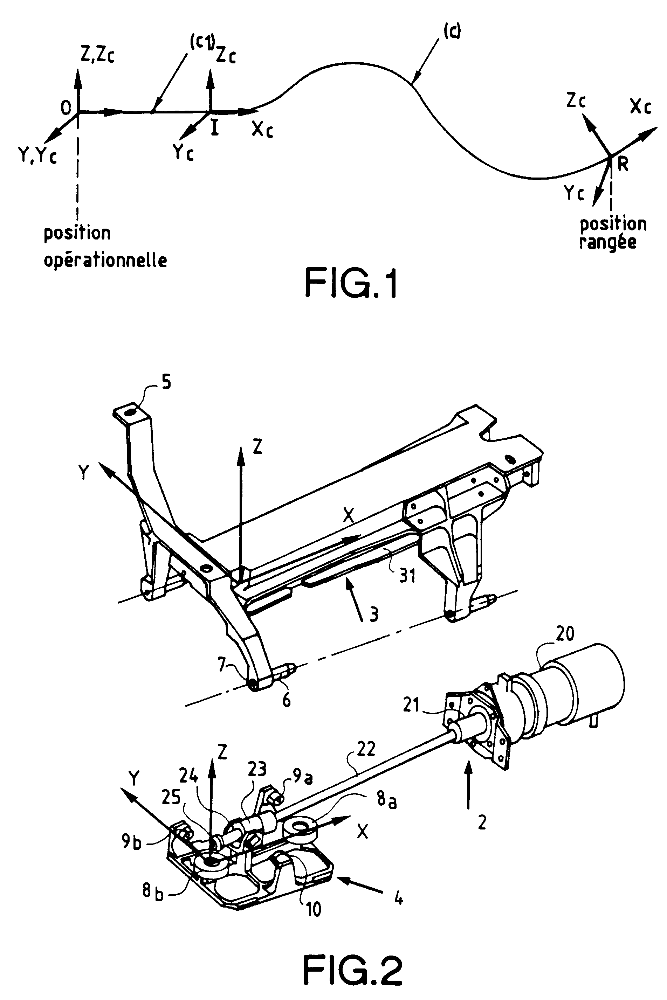

La figure 1 est un exemple de trajectoire complexe que doit pouvoir suivre un collimateur grâce au système de guidage et de maintien selon l'invention.

La trajectoire, symbolisée par la courbe (C), est dite complexe en ce sens que, dans un espace à trois dimensions (espace de la cabine de pilotage notamment), de référentiel constitué par exemple par les trois axes orthogonaux X, Y, Z, elle peut correspondre à un mouvement susceptible de posséder six degrés de liberté, à savoir les trois translations selon les axes X, Y, Z et les trois rotations autour de ces mêmes axes.

Le collimateur est symbolisé par trois points différents O, I, R correspondant à trois positions successives de ce collimateur le long de la courbe (C). Un repère orthogonal lié à ce collimateur est également schématisé par les trois axes orthogonaux X_{c}, Y_{c}, Z_{c} dont les positions relatives par rapport aux axes X, Y, Z illustrent le mouvement à plusieurs degrés de liberté. Le point O correspond plus exactement à la position opérationnelle du collimateur, position pour laquelle le repère (X_{c}, Y_{c}, Z_{c}) lié au collimateur est confondu ici avec le référentiel (X, Y, C). Le point R correspond, quant à lui, à la position de rangement du collimateur. Enfin, on a représenté au point I une position intermédiaire du collimateur lors de son déplacement sur la courbe (C). Nous verrons ultérieurement qu'il est préférable qu'un morceau (C₁) de la trajectoire, au voisinage de la position opérationnelle O, soit rectiligne, ici selon l'axe X, de façon à assurer un bon positionnement du collimateur lors de son utilisation.

Comme nous l'avons dit précédemment, la trajectoire complexe (C) est prédéterminée en fonction de l'espace disponible dans la cabine de pilotage de l'aéronef, lequel espace peut bien entendu varier d'un type d'aéronef à l'autre.

La figure 2 est une vue éclatée selon l'axe Z d'un exemple de réalisation du dispositif de maintien et de guidage d'un collimateur selon l'invention, permettant le guidage selon une trajectoire prédéfinie :

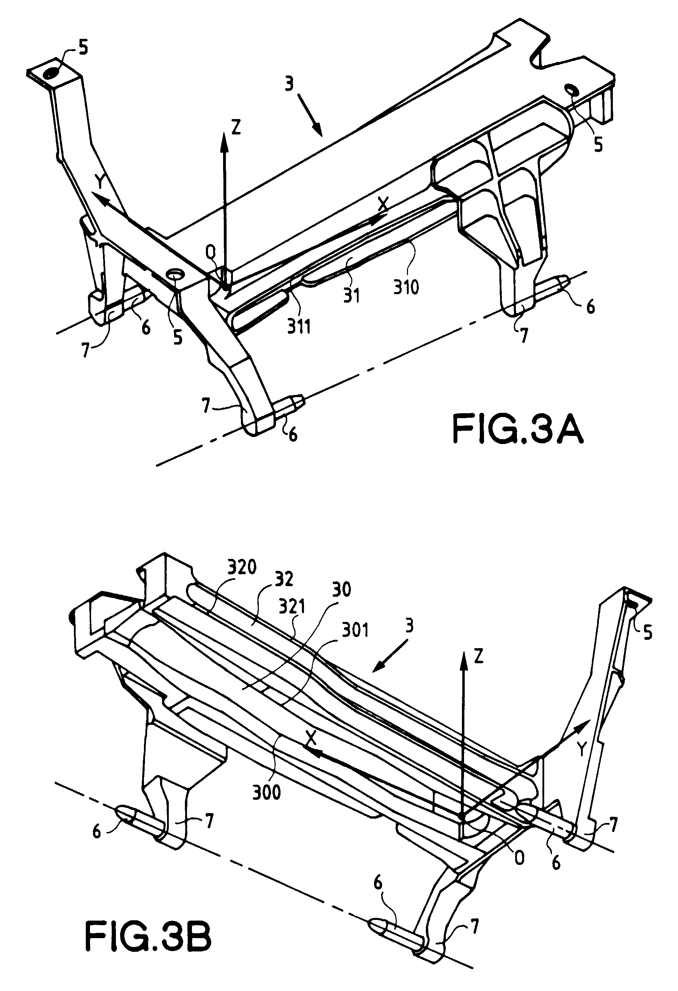

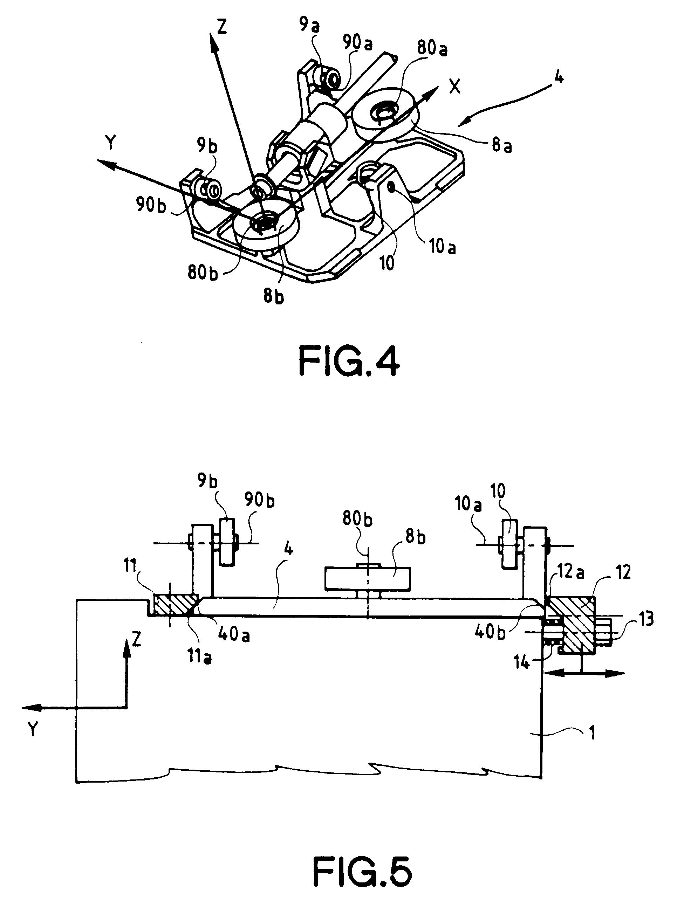

Selon une caractéristique essentielle de l'invention, le dispositif de maintien et de guidage est constitué de deux structures principales :
- Une première structure 3 fixée à l'aéronef, et dont nous détaillerons les éléments constitutifs en référence aux figures 3A et 3B ;
- Une seconde structure 4 solidaire du collimateur (non visible sur la figure 2) et mobile par rapport à la première structure selon la trajectoire prédéfinie. Là encore, nous détaillerons ultérieurement les éléments constitutifs de cette seconde structure, en référence à la figure 4.

On a également représenté sur cette figure 2 un exemple de moyens de commande 2, permettant de déplacer la seconde structure 4, donc le collimateur, le long de la trajectoire prédéfinie. Dans cet exemple, la commande est motorisée. Les moyens de commande sont par exemple constitués d'un motoréducteur 20 entraînant en rotation un cardan 21 autour d'un axe confondu ici avec l'axe X, et plus généralement avec l'axe principal de la trajectoire. Lors de cette rotation, une vis à billes 22 solidaire en rotation du cardan 21, est animée d'un mouvement de translation selon l'axe X; Un écrou à vis 23 concentrique à la vis 22, libre en rotation et solidaire en translation de la seconde structure 4 par tous moyens connus de solidarisation 24, est entraîné dans la translation de la vis 22 selon l'axe X par un écrou 25 venant par exemple fermer l'extrémité libre de la vis 22. Bien entendu, on peut également prévoir des moyens de commande manuels, sous forme par exemple d'une manette solidaire de la seconde structure 4, et actionnée directement par le pilote de l'aéronef.

Les éléments constitutifs de la première structure 3 vont être à présent décrits en référence aux figures 3A et 3B, lesquelles représentent une vue respectivement de dessus et de dessous de cette première structure 3 dans l'espace à trois dimensions de repère orthogonal X, Y, Z :

Cette première structure est fixée à l'aéronef par l'intermédiaire de premiers moyens de fixation 5, par exemple en trois points représentés par des trous sur les figures 3A et 3B. Ces premiers moyens de fixation 5 sont constitués par tous moyens connus permettant une fixation rigide, de manière à pouvoir supporter le poids du dispositif complet et du collimateur.

Selon une caractéristique essentielle de l'invention, cette première structure 3 comporte trois rainures de guidage dont les trajectoires sont telles que leur combinaison constitue la trajectoire complexe prédéfinie :

Plus précisément, la première structure 3 comporte, sur sa partie inférieure, une rainure de guidage centrale 30 comprenant deux parois internes 300 et 301 parallèles à une première trajectoire. Cette première trajectoire est plane, et contenue ici dans le plan d'axes X, Y.

La première structure 3 comporte en outre deux rainures de guidage latérales 31, 32 identiques, placés de part et d'autre de la rainure centrale 30 comprenant chacune deux parois internes référencées respectivement 310, 311 et 320, 321. Les deux parois 310 et 311 de la rainure 31 sont parallèles à une seconde trajectoire plane contenue dans le plan d'axes X, Z et les parois 320, 321 de la rainure 32 sont parallèles à une troisième trajectoire contenue également dans un plan d'axes X, Z.

Une caractéristique importante de l'invention est donc d'avoir une trajectoire initiale complexe décomposée sur deux plans perpendiculaires en trois trajectoires planes plus simples, ce qui rend possible la fabrication et l'usinage de rainures.

De manière avantageuse, la première structure 3 du dispositif selon l'invention comporte également trois doigts 6 identiques placés en trois endroits différents de la première structure 3 parallèlement à l'axe principal de la trajectoire, c'est-à-dire l'axe X dans notre cas de figures, et fixés à des butées 7 de la structure 3 préférentiellement perpendiculaire à cet axe principal. De façon préférentielle, deux des trois butées 7 sont situées dans un même plan, ici le plan d'axe Z, Y contenant le point O de la figure 1. Le nombre et la position relative de ces doigts 6 sont nécessaires et suffisants pour assurer une bonne répétitivité de mise en position opérationnelle du collimateur. En effet, le collimateur, non représenté sur les figures 3A et 3B, vient, lors de sa mise en position opérationnelle, s'enficher sur les trois doigts 6 par l'intermédiaire par exemple de trois trous, et atteint réellement sa position opérationnelle O lorsqu'il rencontre les butées 7. Afin de synchroniser l'enfichage du collimateur dans les trois doigts 6, il est nécessaire d'avoir une trajectoire rectiligne au moins sur la longueur des doigts, ce qui explique la portion rectiligne (C₁) montrée sur la figure 1.

La figure 4 est une vue de dessus de la seconde structure mobile 4 faisant partie du dispositif de guidage et de maintien de la figure 2. Sur cette figure, apparaît également une partie des moyens de commande motorisée que nous ne redécrirons pas. Pour simplifier, on ne va décrire que les éléments de cette seconde structure qui coopèrent avec les rainures 30, 31, 32 de la première structure 3 pour assurer un déplacement selon la trajectoire complexe (C) :

La seconde structure 4 est munie de trois dispositifs de guidage coopérant chacun avec l'une des trois rainures 30, 31, 32. Plus précisément, un premier dispositif de guidage central constitué de deux galets de roulement 8a, 8b d'axes de roulement 80a, 80b distincts et parallèles, vient coopérer avec la rainure de guidage centrale 30. Dans notre cas de figure, les galets de roulement 8a et 8b sont dans un plan d'axes X, Y et ont des axes de roulement 80a, 80b parallèles à l'axe Z. Les galets ont un diamètre égal à la largeur de la rainure 30, et chacun vient en contact tangentiel avec chacune des parois internes 300 et 301 de la rainure centrale 30. De même, un premier dispositif de guidage latéral constitué de deux galets de roulement 9a, 9b d'axes de roulement respectifs 90a, 90b distincts et parallèles, vient coopérer avec l'une des rainures latérales, la rainure 32 dans notre cas de figure. Afin d'éviter tout blocage des galets dans les rainures, les axes de roulement 90a, 90b des galets latéraux croisent chacun respectivement l'axe de roulement 80a, 80b des galets centraux. Cela signifie que les galets 8a, 8b et les galets 9a, 9b sont espacés par une même distance deux à deux. Comme précédemment, chaque galet 9a, 9b vient en contact tangentiel avec chaque paroi interne 320, 321 de la rainure latérale 32.

Enfin, un second dispositif de guidage latéral constitué d'un seul galet de roulement 10 vient coopérer avec la rainure latérale restante, c'est-à-dire la rainure 31 dans notre exemple. L'axe de roulement 10a de ce galet 10 est parallèle aux axes de roulement 90a, 90b, et préférentiellement situé à égale distance de ces deux axes.

La combinaison des cinq galets et des trois rainures précédentes permet d'avoir un mouvement possédant six degrés de liberté :

En effet, la première trajectoire suivie par le dispositif de guidage central permet d'effectuer les translations suivant les axes X et Y. De plus, la position relative des deux galets 8a, 8b permet d'effectuer une rotation autour de l'axe Z. De même, les seconde et troisième trajectoires suivies par les premier et second dispositifs latéraux permettent d'obtenir la translation suivant l'axe Z, et la position relative des deux galets 9a, 9b permet d'avoir la rotation autour de l'axe Y. Enfin, la rotation autour de l'axe X est créée par la position relative entre d'une part, les galets 9a, 9b, et d'autre part, le galet 10.

Pour une trajectoire complexe ayant de faibles amplitudes de mouvement selon les trois axes, le fond des rainures peut être plan. Il faut seulement veiller à ce que les profondeurs des rainures soient suffisantes pour que les galets puissent se déplacer en translation suivant leur axe de roulement sans sortir des rainures ni aller buter contre le fond de ces rainures.

En revanche, pour des trajectoires complexes à grandes amplitudes de mouvement, il convient d'optimiser le volume total du dispositif, par exemple en faisant suivre aux fonds des rainures une trajectoire sensiblement similaire à la trajectoire complexe.

La forme des galets est également avantageusement optimisée de manière à éviter les blocages de ces galets dans les rainures : On utilise avantageusement des galets de forme sphérique dans les parties en contact avec les parois internes des rainures, de manière à avoir un diamètre constant entre les points de contact tangentiel, ceci quelle que soit la position du galet dans la rainure.

La figure 5 est une vue, dans le plan ZY, d'une partie du dispositif de maintien et de guidage selon l'invention, illustrant un exemple de réalisation des seconds moyens de fixation du collimateur 1 à la structure mobile 4 du dispositif.

Ces seconds moyens de fixation constituent avantageusement une attache rapide permettant le montage et le démontage simples du collimateur 1. Ces seconds moyens de fixation sont par exemple constitués de deux brides 11 et 12 de même axe sensiblement parallèle à l'axe de roulement 90b (ou 10a) des galets latéraux de la structure mobile 4.

L'une des brides 11 est fixe sur le collimateur 1, tandis que l'autre bride 12 est solidaire en translation d'une vis filetée 13 montée sur le collimateur. Un ressort 14 axial à la vis 13 permet de maintenir la bride 12 contre la tête de la vis 13. Lorsque la vis 13 est serrée, le collimateur 1 est maintenu à la structure 4 grâce à des parois inclinées 11a, 12a de chaque bride 11, 12 venant en butée contre des parois de même inclinaison 40a, 40b situées sur la structure mobile 4.

Le dispositif selon l'invention tel qu'il vient d'être présenté, possède le grand avantage d'être aisément adaptable en fonction de l'aéronef dans lequel il doit être monté. En effet, il suffit de déterminer, selon l'environnement disponible, les deux positions opérationnelle et rangée, ainsi que la trajectoire complexe (C) reliant ces deux positions. A partir de cette trajectoire complexe (C), on définit les trois trajectoires planes des rainures centrale et latérale, ce qui permet de connaître l'usinage à faire sur la première structure. La méthode suivie pour définir ces trajectoires peut consister à regarder, pas à pas, des positions successives de collimateur, et par là-même, des différents galets, le long de la trajectoire complexe, puis de lisser les courbes reliant ces positions successives. D'un aéronef à l'autre, seule cette première structure est donc susceptible d'être modifiée.

## Revendications

1. Dispositif de maintien et de guidage d'un collimateur (1) dans un aéronef selon une trajectoire prédéterminée permettant au collimateur d'être déplacé par l'action de moyens de commande (2), entre une position opérationnelle et une position rangée, le dispositif étant caractérisé en ce que, la trajectoire étant prédéterminée dans un espace à trois dimensions (X, Y, Z), il comporte :
- Une première structure (3) fixée à l'aéronef par des premiers moyens de fixation (5), et comportant une rainure de guidage centrale (30) comprenant deux parois internes (300, 301) parallèles à une première trajectoire plane, ainsi que deux rainures de guidage latérales (31, 32) de part et d'autre de la rainure centrale, comprenant chacune deux parois internes (310, 311, 320, 321) parallèles respectivement à une seconde et à une troisième trajectoires, la seconde et troisième trajectoires étant situées dans deux plans sensiblement parallèles entre eux, et perpendiculaires à la première trajectoire ;
- Une seconde structure (4) solidaire du collimateur (1) par des seconds moyens de fixation, et mobile par rapport à la première structure (3) par l'intermédiaire d'un dispositif de guidage central (8a, 8b) et d'un premier et second dispositifs de guidage latéraux (9a, 9b, 10), situés sur cette seconde structure et coopérant respectivement avec la rainure centrale (30) et les rainures latérales (31, 32) de la première structure pour assurer le maintien et le guidage de la seconde structure (4) et du collimateur (1) sur chaque rainure, les trajectoires relatives à chaque rainure étant telles que leur combinaison assure un mouvement de la seconde structure selon la trajectoire prédéterminée.

2. Dispositif selon la revendication 1, caractérisé en ce que le dispositif de guidage central est constitué de deux galets de roulement (8a, 8b) d'axes de roulement (80a, 80b) distincts et parallèles, chaque galet venant en contact tangentiel avec chacune des parois (300, 301) internes de la rainure centrale ;
en ce que le premier dispositif de guidage latéral est constitué de deux galets de roulement (9a, 9b) d'axes de roulement (90a, 90b) distincts et parallèles entre eux, chaque axe de roulement croisant l'un des axes de roulement (80a, 80b) du dispositif de guidage central, et chaque galet de roulement de ce premier dispositif latéral venant en contact tangentiel avec chacune des parois (310, 311 ; 320, 321) internes de l'une des deux rainures latérales (31 ; 32); et en ce que le deuxième dispositif de guidage latéral est constitué d'un galet de roulement (10) d'axe de roulement (10a) situé entre et parallèlement aux deux axes de roulement (90a, 90b) du premier dispositif, ce galet (10) venant en contact tangentiel avec chacune des parois de l'autre rainure latérale.

3. Dispositif de maintien et de guidage selon la revendication 2, caractérisé en ce que la profondeur de la rainure centrale (30) et des rainures latérales (31, 32) doit être suffisamment grande pour que les différents galets puissent se déplacer en translation suivant leur axe de roulement sans sortir des rainures, ni buter contre le fond de ces rainures.

4. Dispositif de maintien et de guidage selon l'une quelconque des revendications 2 et 3, caractérisé en ce que les parties des galets, qui sont en contact tangentiel avec les parois internes des rainures, ont une forme sphérique.

5. Dispositif de maintien et de guidage selon l'une quelconque des revendications précédentes, caractérisé en ce qu'une portion (C₁) de la trajectoire prédéterminée est rectiligne au voisinage de la position opérationnelle (O) du collimateur (1).

6. Dispositif de maintien et de guidage selon la revendication 5, caractérisé en ce que la première structure (3) comporte, en trois endroits différents dont deux sont situés sur un plan comprenant la position opérationnelle (O) du collimateur (1) et perpendiculaire à la portion (C₁) de la trajectoire, trois doigts (6) parallèles à cette portion, sur lesquels peuvent venir s'enficher trois trous situés sur le collimateur (1).

7. Dispositif de maintien et de guidage selon l'une quelconque des revendications précédentes, caractérisé en ce que les moyens de commande (2) sont constitués d'un motoréducteur (20) entraînant en rotation un cardan (21), d'une vis à billes (22) solidaire en rotation du cardan (21) et animée d'un mouvement de translation, et d'un écrou à vis (23) concentrique à la vis à billes (22), libre en rotation et solidaire en translation à la seconde structure (4), ledit écrou à vis (23) étant entraîné dans le mouvement de translation par un écrou (25) fermant une extrémité libre de la vis à billes (22).

## Patentansprüche

1. Vorrichtung zum Halten eines Kollimators (1) und zum Führen dieses Kollimators entlang eines vorbestimmten Verschiebewegs, sodaß der Kollimator mithilfe von Steuermitteln (2) zwischen einer Betriebsstellung und einer Ruhestellung verschoben werden kann, dadurch gekennzeichnet, daß, wenn der Verschiebeweg in einem dreidimensionalen Raum (X, Y, Z) vorbestimmt ist, die Vorrichtung enthält:
- eine erste im Flugzeug durch erste Befestigungsmittel (5) festgelegte Struktur (3), die eine zentrale Führungsrinne (30) mit zwei zu einer ersten ebenen Bahn parallelen inneren Wänden (300, 301) sowie zwei seitliche Führungsrinnen (31, 32) zu beiden Seiten der zentralen Rinne mit je zwei zu einer zweiten beziehungsweise dritten Bahn parallelen inneren Wänden (310, 311; 320, 321) aufweist, wobei die zweite und die dritte Bahn in zwei zueinander im wesentlichen parallelen und zur ersten Bahn senkrechten Ebenen liegen,
- eine zweite mit dem Kollimator (1) über zweite Befestigungsmittel verbundene Struktur (4), die bezüglich der ersten Struktur (3) über eine zentrale Führungsvorrichtung (8a, 8b) und eine erste und eine zweite seitliche Führungsvorrichtung (9a, 9b; 10) beweglich ist, wobei diese Vorrichtungen auf dieser zweiten Struktur liegen und mit der zentralen Rinne (30) beziehungsweise den seitlichen Rinnen (31, 32) der ersten Struktur zusammenwirken, um die zweite Struktur (4) und den Kollimator (1) auf jeder Rinne zu halten und zu führen, und wobei die Bahnen bezüglich jeder Rinne so gewählt sind, daß ihre Kombination eine Bewegung der zweiten Struktur entlang des vorbestimmten Verschiebewegs gewährleistet.

2. Vorrichtung nach Anspruch 1, dadurch gekennzeichnet,
- daß die zentrale Führungsvorrichtung von zwei Rollen (8a, 8b) gebildet wird, die nebeneinanderliegende parallele Rollachsen (80a, 80b) besitzen und tangential mit jeder der inneren Wände (300, 301) der zentralen Rinne in Kontakt kommen,
- daß die erste seitliche Führungsvorrichtung von zwei Rollen (9a, 9b) gebildet wird, deren Rollachsen (90a, 90b) nebeneinander parallel verlaufen, wobei jede Rollachse eine der Rollachsen (80a, 80b) der zentralen Führungsvorrichtung schneidet und jede Rolle der ersten seitlichen Führungsvorrichtung in tangentialem Kontakt mit jeder der inneren Wände ((310, 311; 320, 321) der einen der beiden seitlichen Rinnen (31; 32) kommt,
- und daß die zweite seitliche Führungsvorrichtung aus einer Rolle (10) besteht, deren Rollachse (10a) parallel zu den beiden Rollachsen (90a, 90b) der ersten seitlichen Führungsvorrichtung und zwischen diesen verläuft, wobei diese Rolle (10) tangential mit jeder der Wände der anderen seitlichen Rinne in Kontakt kommt.

3. Halte- und Führungsvorrichtung nach Anspruch 2, dadurch gekennzeichnet, daß die Tiefe der zentralen Rinne (30) und der seitlichen Rinnen (31, 32) ausreichend groß ist, damit die verschiedenen Rollen sich translatorisch in Richtung ihren Rollachsen verschieben können ohne die Rinne zu verlassen oder am Grund dieser Rinnen anzustoßen.

4. Halte- und Führungsvorrichtung nach einem beliebigen der Ansprüche 2 und 3, dadurch gekennzeichnet, daß die Bereiche der Rollen, die in tangentialem Kontakt mit den inneren Wänden der Rinnen stehen, eine ballige Form besitzen.

5. Halte- und Führungsvorrichtung nach einem der beliebigen der vorstehenden Ansprüche, dadurch gekennzeichnet, daß ein Bereich (C₁) des vorbestimmten Verschiebewegs in der Nähe der Betriebsstellung (O) des Kollimators geradlinig ist.

6. Halte- und Führungsvorrichtung nach Anspruch 5, dadurch gekennzeichnet, daß die erste Struktur (3) an drei verschiedenen Stellen, von denen zwei sich in einer die Betriebsstellung (0) des Kollimators einschließenden und senkrecht zum Bereich (C₁) des Verschiebewegs liegenden Ebene befinden, drei zu diesem Bereich parallele Finger (6) enthält, die in drei am Kollimator (1) angebrachte Löcher eindringen können.

7. Halte- und Führungsvorrichtung nach einem beliebigen der vorstehenden Ansprüche, dadurch gekennzeichnet, daß die Steuermittel (2) von einem Motor mit Untersetzungsgetriebe (20), der eine Kardanwelle (21) antreibt, von einer Schraube mit Kugeln (22), die in Drehrichtung mit der Kardanwelle (21) gekoppelt ist und in Translation versetzt werden kann, und von einer zur Schraube (22) konzentrischen Schraubmutter (23) gebildet werden, die frei drehen kann und in Translationsrichtung mit der zweiten Struktur (4) gekoppelt ist, wobei die Schraubmutter (23) durch eine Mutter (25) in Translationsrichtung angetrieben wird, die ein freies Ende der Schraube (22) verschließt.

## Claims

1. Device for supporting and guiding a collimator (1) in an aircraft along a predetermined trajectory allowing the collimator to be moved by the action of control means (2) between an operational position and a stored position, the device being characterized in that, the trajectory being predetermined in a three-dimensional space (X, Y, Z), it comprises:
- a first structure (3) attached to the aircraft by first attachment means (5), and including a central guiding groove (30) having two internal walls (300, 301) which are parallel to a first plane trajectory, as well as two lateral guiding grooves (31, 32) on each side of the central groove, each groove having two internal walls (310, 311, 320, 321) which are parallel respectively to a second trajectory and to a third trajectory, the second and third trajectories lying in two planes which are more or less mutually parallel and are perpendicular to the first trajectory;
- a second structure (4) fastened to the collimator (1) by second attachment means and able to move with respect to the first structure (3) by means of a central guiding device (8a, 8b) and of a first and second lateral guiding device (9a, 9b, 10), these lying on this second structure and interacting respectively with the central groove (30) and the lateral grooves (31, 32) of the first structure in order to support and guide the second structure (4) and the collimator (1) on each groove, the relative trajectories of each groove being such that their combination causes the second structure to move along the predetermined trajectory.

2. Device according to Claim 1, characterized in that the central guiding device consists of two rolling wheels (8a, 8b) with separate and parallel rolling axes (80a, 80b), each wheel coming into tangential contact with each of the internal walls (300, 301) of the central groove; and in that the first lateral guiding device consists of two rolling wheels (9a, 9b) with separate and mutually parallel rolling axes (90a, 90b), each rolling axis crossing one of the rolling axes (80a, 80b) of the central guiding device and each rolling wheel of this first lateral device coming into tangential contact with each of the internal walls (310, 311; 320, 321) of one of the two lateral grooves (31; 32); and in that the second lateral guiding device consists of a rolling wheel (10) with a rolling axis (10a) lying between and parallel to the two rolling axes (90a, 90b) of the first device, this wheel (10) coming into tangential contact with each of the wallS of the other lateral groove.

3. Supporting and guiding device according to Claim 2, characterized in that the depth of the central groove (30) and of the lateral grooves (31, 32) must be sufficiently great for the various wheels to be able to move translationally along their rolling axis without leaving the grooves, or striking the bottom of these grooves.

4. Supporting and guiding device according to either of Claims 2 and 3, characterized in that those parts of the wheels which are in tangential contact with the internal walls of the grooves have a spherical shape.

5. Supporting and guiding device according to any one of the preceding claims, characterized in that a portion (C₁) of the predetermined trajectory is rectilinear in the region of the operational position (O) of the collimator (1).

6. Supporting and guiding device according to Claim 5, characterized in that the first structure (3) has, at three different places, two of which lie on a plane containing the operational position (O) of the collimator (1) and perpendicular to the portion (C₁) of the trajectory, three fingers (6) which are parallel to this portion and which can be inserted into three holes in the collimator (1).

7. Supporting and guiding device according to any one of the preceding claims, characterized in that the control means (2) consist of a gear motor (20), driving a universal joint (21) in rotation, of a ball screw (22), which is rotationally integral with the universal joint (21) and is given a translational movement, and of a screw nut (23) concentric with the ball screw (22), rotationally free and translationally integral with respect to the second structure (4), the said screw nut (23) being driven in the translational movement by a nut (25) which closes a free end of the ball screw (22).
